# EUROPEAN PATENT APPLICATION

(11) **EP 4 600 633 A1**
(43) Date of publication of application: **13.08.2025**
(21) Application number: 24156560.5
(22) Date of filing: 08.02.2024
(51) Int. Cl.: G01N 21/03, G01N 21/31, G01B 11/06, G01N 21/11, G01N 21/51, G01N 21/85, G01N 21/64, G01N 21/84

(54) **A METHOD AND APPARATUS FOR PERFORMING A SPECTRAL MEASUREMENT ON A LIQUID SAMPLE**

(71) Applicant: Universität Bayreuth, in Vertretung des Freistaates Bayern, 95447 Bayreuth (DE)
(72) Inventor: ELLER, Fabian, 95447 Bayreuth (DE); HERZIG, Eva M., 95447 Bayreuth (DE)
(74) Representative: Lucke, Andreas

(57) **Abstract**

Disclosed herein is a method and device for performing a spectral measurement on a liquid sample (12). The method comprises the steps of: providing the liquid sample (12), wetting an optical wall (24) with the liquid sample (12) to generate a liquid film (26) of the sample (12) on the optical wall (24), wherein the optical wall (24) is at least temporarily aligned such that the sample (12) flows off or down the wetted optical wall (24) due to an external force and a thickness of the liquid film changes over time, irradiating, in particular transilluminating, the liquid film (26) on the wetted optical wall (24) with an optical beam (32) to generate an optical beam (32) containing spectral information of the sample (12), and acquiring the spectral information from the generated optical beam (32).

## Description

### TECHNICAL FIELD

The present invention is in the field of optical measurement technology.

### BACKGROUND

Absorption spectra are used in various scientific fields and also in many branches of industry in order to obtain important information, for example a composition or specific properties, about substances, such as paints, lacquers, foodstuffs and many other substances.

The substances to be analyzed are particularly often liquids or solids which are dissolved in a liquid. In particular in application-relevant fields, such liquid samples absorb very strongly, sometimes only in certain spectral ranges.

In the case of liquid samples with an optical density (OD) of approximately OD=1 (corresponds to an attenuation by a factor of 10), spectral measurement is usually very reliable, whereas in the case of an optical density of OD=2 (corresponds to an attenuation by a factor of 100) spectral shapes can often be distorted using conventional methods and can thus sometimes only be used to a limited extent. The threshold of optical density, up to which reliable measurements can be carried out, may differ depending on the method used.

Typically, therefore, for the measurement of liquid samples with common optical path lengths, e.g. of 1 cm or 1 mm, the samples are diluted by several orders of magnitude.

Apart from the additional effort, it is particularly disadvantageous that the behavior of the sample material and the optical properties can change considerably with the concentration, for example because the interaction of the material dissolved in the sample with one another is greatly reduced. If processes, such as, for example, chemical reactions or a cooling behavior, are measured spectrally, a changed behavior can be expected even more.

For the spectral measurement of undiluted, liquid samples, there are special cuvettes with reduced optical path length. However, these usually have a complex structure and require a great deal of work for each measurement. In particular for industrial purposes with high sample throughput, measurement with such special cuvettes is associated with high additional costs, both for the special cuvettes required themselves as well as for the labor required per sample.

### SUMMARY OF THE INVENTION

The present invention is based on the object of providing a method and a device which allow improved spectral measurement on liquid samples.

This object is achieved by a method according to claim 1 and by a device according to claim 12. Advantageous embodiments and developments are specified in the dependent claims.

The method according to the invention for performing a spectral measurement on a liquid sample comprises the steps of:
- providing the liquid sample,
- wetting an optical wall with the liquid sample to generate a liquid film of the sample on the optical wall, wherein the optical wall is at least temporarily aligned such that the sample flows off or down the wetted optical wall due to an external force and a thickness of the liquid film changes over time,
- irradiating, in particular transilluminating, the liquid film on the wetted optical wall with an optical beam to generate an optical beam containing spectral information of the sample,
- acquiring the spectral information from the generated optical beam.

The change in the thickness of the liquid film over time may in particular be a decrease in the thickness of the liquid film.

"Irradiating the liquid film on the wetted optical wall with an optical beam" means in particular that the optical beam is brought into interaction with the liquid film. Depending on the interaction of the optical beam with the liquid film taking place, an optical beam containing spectral information of the sample is transmitted, scattered, emitted and/or reflected. "Transilluminating the liquid film on the wetted optical wall with an optical beam" means in particular that at least a part of the optical beam penetrates the liquid film at least in sections and spectral information of the sample is impressed/imprinted on the optical beam. The irradiation or transillumination may take place from one (spatial) direction or from different (spatial) directions, wherein an irradiation or transillumination from different (spatial) directions may take place simultaneously, offset in time or overlapping in time.

The generated optical beam, which contains spectral information of the sample and from which the spectral information is acquired, may have been transmitted through the optical wall or reflected therefrom.

The generated outgoing transmitted or reflected optical beam may preferably comprise or consist of non-absorbed radiation of the incoming optical beam for irradiating the liquid film.

In some embodiments, the generated optical beam may also comprise or consist of radiation, in particular light, emitted by the liquid film or scattered by the same.

The acquisition or detection of the spectral information may take place in different (spatial) directions in relation to the incoming optical beam.

The optical wall may be completely or partially transparent in one or more spectral ranges, which are intended in particular for the measurement, if a transmission is acquired, and/or may be completely or partially reflective if, alternatively or additionally, a reflection is acquired.

The optical wall may be made of glass or plastic.

In some embodiments, the optical wall has an optical coating for setting a certain reflection and/or transmission behavior in the relevant spectral ranges.

The external force is preferably gravity. Alternatively or additionally, the external force may be a force or a pressure force exerted by a fluid flow, in particular by a gas flow, a magnetic force, in particular in the case of magnetic samples, a centrifugal force and/or a shear force, in particular imparted by a second surface.

If the sample flows down the wetted optical wall due to gravity as an external force, the thickness of the liquid film may decrease over time. In some embodiments, however, the thickness may also increase and/or first increase and decrease again.

The liquid sample may be provided in a container, in a line, in a line section or in a line system.

By providing and using for the measurement the sample in the form of a liquid film, the thickness of which changes, in particular decreases, over time due to the external force, for example gravity, very short optical path lengths may be generated in the region of the sample for the measurement. As a result, even very strongly absorbing samples can be measured spectrally in a precise and reliable manner without dilution. Due to the film thickness changing, in particular decreasing, over time, at least for certain samples an optical path length optimal for the measurement can be used comparatively simply, at which the absorption is neither too weak nor too strong and thus the spectral information can be acquired. The spectral information may be, for example, the spectral position and/or shape of one or more absorption lines or regions and/or the respective relative strength of absorption lines and/or regions in relation to other absorption lines or regions and/or in relation to a reference spectrum, which has been acquired, for example, without the liquid film before wetting or after at least a part of the liquid film has flown off.

In order to enable flowing down, for example, due to gravity, the optical wall may be aligned vertically, in particular may have a horizontal surface normal, but may also have only a vertical portion or a vertical component. For example, a surface normal of the optical wall may be inclined in the range from 0° to 15°, from 15° to 30°, from 30° to 45°, from 45° to 60°, from 60° to 75° or from 75° to 85° with respect to the horizontal direction.

The liquid film may be irradiated with an optical beam at different times and the spectral information may be acquired at different thicknesses of the irradiated liquid film. As a result, from several spectral measurements, an optimum measurement at an optimum optical path length through the liquid film may be selected, in which the spectral information may be determined with the highest reliability and/or accuracy. Optionally, several spectral measurements at different optical path lengths may also be averaged with suitable weightings.

In an advantageous embodiment, a viscosity information of the sample is determined based on a time profile of the spectral information, for example, the speed of a temporal decrease in the absorption at a spectral position. A highly viscous sample flows off more slowly than a low-viscosity sample. The viscosity information may be the viscosity or an absolute or relative value that depends on the viscosity. This also enables the determination of a viscosity-related change in the sample , for example, within the framework of quality monitoring.

In an advantageous embodiment, gas, for example, air, is introduced into the liquid sample provided, so that gas bubbles rise in the sample, lead to wetting of the optical wall arranged in the region of the surface of the sample and generate a liquid film thereon. This enables a simple, less complex measurement setup, which is particularly suitable for in-line measurements, i.e., measurements on samples, which flow through lines, for example, in a production plant, either continuously or at specific times.

The introduced gas may be enriched with a substance and, in particular for this purpose, has previously been passed through a liquid with the substance in an upstream container.

The liquid may be a, in particular the same, sample liquid. Additionally or alternatively, the substance and/or the liquid may be a solvent. This can reduce, compensate for or avoid aloss of solvent in the sample in the container occurring over time .

Alternatively, the liquid may also be another liquid, in particular with a substance for changing a property of the sample. For example, chemicals, which cause a reaction with the sample, can be used. The gas can be enriched with different substances by specifically selecting the filling of the upstream container in order to introduce them into the sample in a targeted manner. Induced spectral changes or changes in the viscosity can thus be detected immediately.

In a further embodiment, the method comprises the steps of:
- generating a negative pressure in a tube section, wherein a wall of the tube section is formed at least in sections by the optical wall, so that at least a part of the sample is sucked into the tube section and the optical wall is wetted with the sample,
- removing the negative pressure in the tube section, so that at least a part of the sample flows out of the tube section or is pushed out again and a liquid film is generated on the wetted optical wall.

The tube section may, for example, immerse into the liquid sample when the latter is provided in the container.

In other embodiments, however, the tube section may also be part of a container, a line, a line section or a line system in which the liquid sample is provided. For example, the tube section may be integrated into an existing pipeline as part of a T-piece.

This embodiment represents an alternative to wetting using gas introduction and also enables a simple, less complex measurement setup, in particular for in-line measurements.

In some embodiments, for wetting the optical wall to generate the liquid film on the optical wall, the orientation or position of the container is changed, in particular the container is shaken or rotated.

Alternatively or additionally, for wetting the optical wall to generate the liquid film on the optical wall, a trough of the sample may be generated on the optical wall. The sample trough may be generated on the optical wall, for example, by means of a pipette and/or may have a thickness distribution in the direction of propagation along the optical wall.

The present invention furthermore comprises a device for carrying out a spectral measurement on a liquid sample, in particular according to a method according to one of the embodiments described above, comprising
- a container, a line, a line section or a line system for storing and/or providing a liquid sample,
- an optical wall,
- a wetting device for, in particular automated, wetting the optical wall with the sample to generate a liquid film on the optical wall,
- a radiation source for generating an optical beam which can irradiate the liquid film on the wetted optical wall, in particular transilluminate the same, and to which spectral information of the sample can be impressed/imprinted,
- a device, in particular comprising a spectrometer, for acquiring spectral information of the sample which is impressed/imprinted on the optical beam.

The radiation source is in particular arranged and aligned such that-when the liquid film is generated on the optical wall and the optical beam is generated—the optical beam irradiates the liquid film.

The container may be closed or may allow for the sample to flow through.

All structural and functional features which have been described above with respect to the method may equally also be present in/may apply to the device.

According to one embodiment, the wetting device comprises a pump, in particular a gas pump, for introducing gas into the sample and/or for generating a negative pressure in a tube section for sucking at least a part of the sample into the tube section. This is particularly advantageous for automation and enables the avoidance of a complex and costly actuator system.

The wetting device may comprise an upstream container for storing a liquid such that gas, which is introduced into the upstream container, first flows through the liquid in the upstream container and then through the sample in the container when the containers are filled with the liquid or the sample, respectively.

According to one embodiment, the device comprises a control and evaluation unit which is configured for an operation, wherein the liquid film is irradiated, in particular transilluminated, with an optical beam at different times and the spectral information is acquired at different thicknesses of the irradiated liquid film, and/or wherein a viscosity information of the sample is determined based on a time profile of the spectral information.

In some embodiments, the method and device may provide for measuring the thickness of the liquid film. For example, the method may comprise a step of determining the thickness using interferometric techniques, and the device may include a suitable interferometric apparatus. Alternatively, the liquid sample may be supplemented with some additive substance having a known absorption, so that thickness of the film can be determined from a measured absorption of the optical beam (and a known concentration of the additive substance in the liquid sample). Knowing the thickness of the liquid film, it is then possible to obtain absolute absorption-related information, for example information about the molar extinction.

### BRIEF DESCRIPTION OF THE FIGURES

Further advantages and features of the present invention will become apparent from the following description, in which exemplary embodiments are explained in more detail with reference to drawings. Identical features are provided with identical reference signs.
- FIGS. 1a-d: show a device according to the invention according to a first embodiment.
- FIG. 2: shows a flow chart of a method according to the invention according to a first embodiment.
- FIG. 3: shows a device according to the invention according to a second embodiment.
- FIGS. 4a-d: show a device according to the invention according to a third embodiment.

### DESCRIPTION OF EXEMPLARY EMBODIMENTS

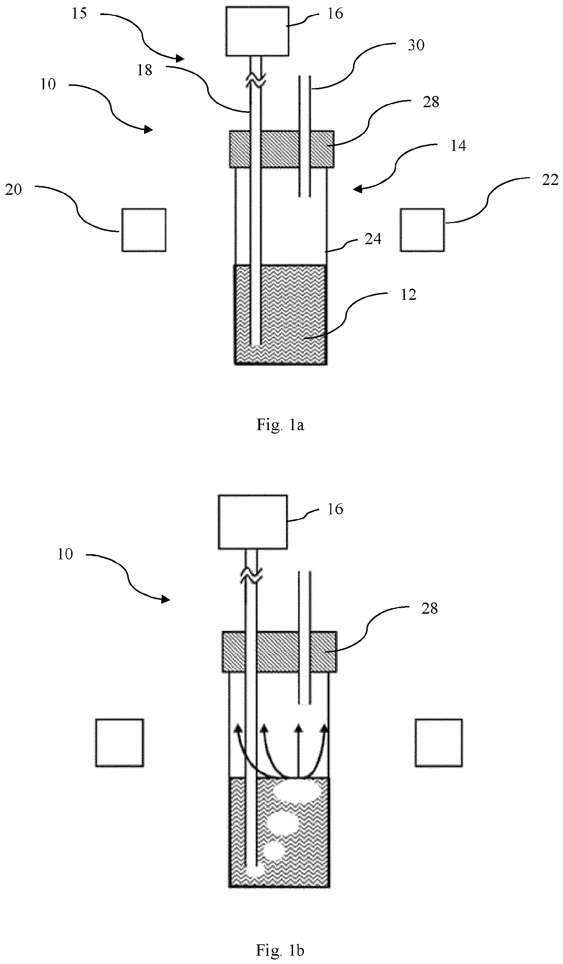

FIGS. 1a to 1d show a device 10 according to the invention according to a first embodiment for carrying out a spectral measurement on a liquid sample 12.

The device 10 comprises a container 14 for storing the sample 12, a wetting device 15 with a pump 16 and a gas supply line 18 connected thereto, for example a tube or a hose, a radiation source 20 and a spectrometer 22. The container 14 is made of optical material and comprises optical walls 24. An optical material is to be understood in particular as a material which is completely or partially transparent in one or more spectral ranges, which are intended in particular for the measurement.

In some embodiments (not shown), in which a reflected optical beam is acquired or detected, the optical wall may consist of or may comprise an optical material which is completely or partially reflective in one or more spectral ranges, which are intended in particular for the measurement.

The container 14 may be closed or may be attached to a tube/large reservoir. In the latter case, the container 14 may in particular allow for the sample 12 to flow through.

The sample 12 may be, for example, a paint, a lacquer, a paste, a gel, a foodstuff or any other liquid, including suspensions and emulsions.

The pump 16 is connected to a first end of the gas supply line 18. With a second end, the gas supply line 18 immerses into the sample 12.

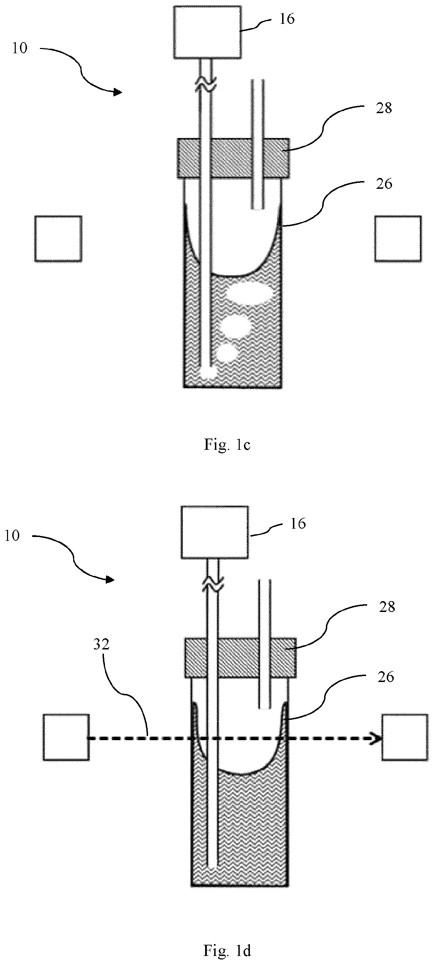

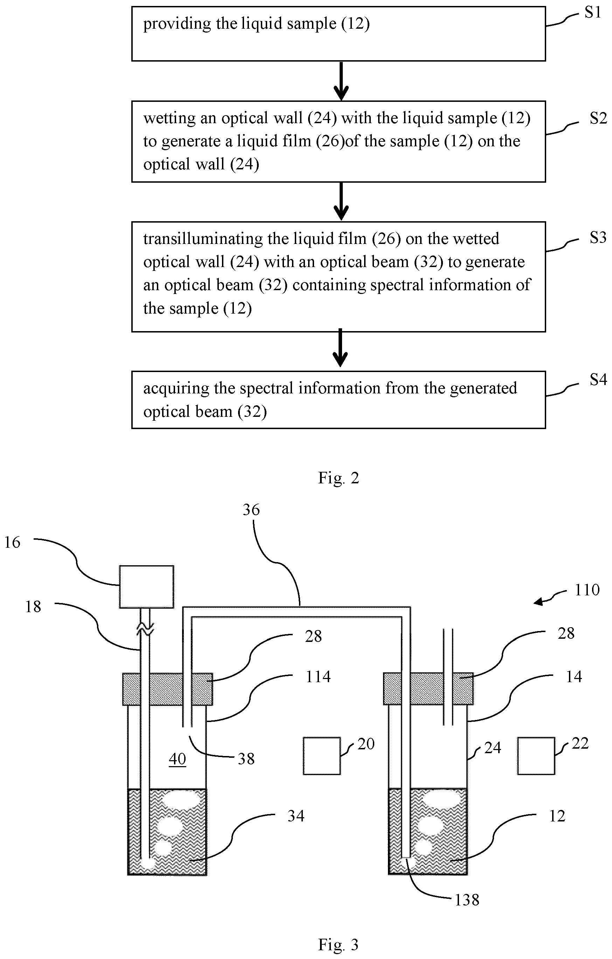

The device 10 of FIG. 1 is intended for carrying out a method according to the invention according to a first embodiment, the steps of which are illustrated in FIG. 2.

In a first step S1, the sample 12 is provided, as illustrated in FIG. 1a.

In a second step S2, an optical wall 24 of the container 14, which was not previously wetted with the sample 12, is wetted with the sample 12. For this purpose, as illustrated in FIGS. 1b and 1c, a gas, for example, air, is introduced into the sample 12 with the pump 16 via the gas supply line 18, one end of which immerses into the sample 12. The gas rises in the sample 12 in the form of bubbles 19 (see FIGS. 1b and 1c). The rising gas bubbles 19 move the sample liquid 12 upwards, so that the initially unwetted optical wall 24 of the container 14 or an initially unwetted part thereof above the surface of the sample liquid 12 is wetted with the sample 12 and a liquid film 26 is formed on the optical wall 24 (see FIGS. 1c and 1d).

As illustrated in FIG. 1, the container 14 may optionally be closed with a closure 28 or a lid, through which the gas supply line 18 and a gas discharge line 30 are guided, wherein the gas discharge line 30 is formed, for example, by a tube or a hose, which does not immerse into the sample 12, but has an open end above the sample 12.

In other embodiments (not shown), the container 14 may also be unclosed or, instead of the gas discharge line 30, only one opening may be provided in the closure 28.

In a third step S3, as illustrated in FIG. 1d, the optical wall 24 and the liquid film 26 formed thereon are irradiated, in particular transilluminated, with an optical beam 32, which is generated by the correspondingly aligned and arranged radiation source 20, so that spectral information of the sample 12 can be impressed/imprinted thereon, provided that the sample 12 interacts with the irradiation in the relevant spectral range.

In other embodiments (not shown), the optical wall 24 is reflective for the optical beam 32 and only the liquid film 26 formed on the optical wall 24 is completely or partially transilluminated, but not the optical wall 24. The generated optical beam 32, which contains spectral information of the sample 12, may then be or may comprise a reflected beam.

In one embodiment, the radiation source 20 may comprise an, in particular broadband, light or white light source and the optical beam 32 may be a light beam. In other embodiments, the optical beam 32 comprises only spectral sub-ranges of visible light and/or spectral ranges outside of visible light with shorter or longer wavelengths, for example, in the UV, IR or NIR range. In some embodiments, the radiation source 20 comprises one or more lasers.

In a fourth step S4, as is also illustrated in FIG. 1d, the spectral information of the sample 12 is acquired from the optical beam 32 with the aid of a spectrometer 22 configured, aligned and arranged for this purpose.

For this purpose, the spectrometer 22 may comprise, for example, a diffractive optical element, an optical grating, a prism and/or an optical detector, such as a CCD camera and/or a photodiode.

The spectrometer 22 may also comprise an evaluation unit for evaluating the acquired information. For example, a measurement may be referenced to a measurement without liquid film 26 (before the wetting) or to a measurement on a liquid film 26 of different thickness (if this has run down or run off the optical wall 24 due to gravity).

In some embodiments, gas is no longer introduced into the sample 12 for wetting S2 during irradiation S3 and acquisition S4. The introduction may be terminated or temporarily suspended, for example, by switching off the pump 16 and/or closing/opening/switching a valve (not shown).

Step S3 (irradiation) and/or step S4 (acquisition) may be carried out (in each case) continuously or discretely (once or several times) in the method and may be combined in any possible combination.

The steps S2 (wetting) and S3 (irradition) do not necessarily have to be carried out one after the other, but may also overlap in time.

This device 10 and this method allow particularly reliable measurements on thin liquid films of a strongly absorbing sample 12.

In some embodiments (not shown), instead of the closed container 14, as illustrated in FIG. 1, a container is provided through which sample liquid can flow. This is advantageous in particular for continuous monitoring processes which proceed in parallel with a production process. In this case, the sample liquid may, for example, be introduced into an analysis line which opens into the (flow-through) container. From the (flow-through) container, the sample liquid taken from the production process can be fed back into the "main stream" downstream the (flow-through) container.

In other embodiments (not shown), instead of the closed container 14, as illustrated in FIG. 1, a line, a line section or a line system for providing the sample 12 may also be provided.

FIG. 3 shows a device 110 according to a second embodiment, which is a further development of the device 10 described above and which, in addition to the container 14, additionally comprises a further container 114 which is connected upstream of the container 14.

The container 114 contains a liquid 34, which may also be the sample liquid 12 or another liquid.

The two containers 14, 114 are connected via a line 36 for conducting gas, which line runs through respective closures 28 of the containers 14, 114. A first end of the line 36 with a first opening 38 is arranged within a gas phase 40 of the upstream container 114 above the liquid 34. The first opening 38 forms a gas outlet opening for the upstream container 114. A second end of the line 36 with a second opening 138 is arranged within the sample liquid 12 within the container 14. The second opening 138 forms a gas inlet opening for the container 14.

The device 110 furthermore comprises a gas supply line 18, the inlet of which is connected to a pump 16, wherein the gas supply line 18 runs through the closure 28 of the upstream container 114 and its outlet is arranged within the liquid 34 within the upstream container 114. A gas outlet, through which gas can escape from the container 14, is located at the container 14.

In the intended operation of the device 110, a gas, for example, air, is pumped through the gas supply line 18 into the liquid 34 with the aid of the pump 16. The gas flows through the liquid 34 and reaches the gas phase 40, which is thereby enriched with the liquid 34. Gas enriched with the liquid 34 flows via the line 36 from the gas phase 40 of the upstream container 114 into the sample liquid 12 in the container 14, where it can generate a liquid film on an optical wall 24 of the container 14, as has been described above with respect to FIG. 1.

By previously passing the gas introduced into the container 14 through the liquid 34 in the upstream container 114 and enriching it with the liquid 34, a loss of the sample liquid 12 in the container 14 occurring over time can be avoided or compensated for. In particular, in the case of samples 12 having a high vapor pressure, a high loss of sample liquid 12 and/or solvent can occur, which can be effectively compensated for by the device 110. As a result, a change in the sample composition occurring over time due to solvent loss, for example, if the sample 12 is a paint or a lacquer, can be prevented, compensated for or reduced. For this purpose, the liquid 34 may be the same sample liquid 12, which is also located in the container 14 for the spectral measurement or - according to other embodiments, in which the sample 12 comprises a solvent and additionally further constituents - may also consist only of the solvent of the sample 12 or may at least comprise said solvent.

Alternatively or additionally to compensating for sample loss, the upstream container 114 may also be used for other purposes in some embodiments. For example, a liquid 34 and/or a substance which changes a property of the sample 12 in the container 14 or the effect of which on the sample 12 is to be spectrally analyzed may be provided in the container 114.

For example, the liquid 34 may be a chemical which causes a reaction with the sample 12 in the container 14. By specifically selecting the liquid 34, the gas phase 40 can be enriched with different substances or substances, which in turn can be specifically introduced into the sample 12 in the downstream container 14. Spectral changes and/or changes in viscosity induced thereby can then be detected immediately using the spectral measurement described above.

An effect which can make measurements more difficult is a formation of bubbles 19 in the measurement region above the liquid level of the sample 12: if bubbles 19 are located in the beam path, interference and reflection effects can occur, which can falsify the measurements at this point in time.

In some embodiments, it is therefore awaited until the bubbles 19 dissolve after a liquid film 26 has formed on the optical wall 24, for example as a result of bursting of the bubbles 19. A measurement can then take place with a delay for bubble generation. In some embodiments according to the invention (not shown), the gas can also be introduced into the sample 12 in the container 14 via two or more supply lines at different locations in order to suppress a formation of bubbles 19. For example, the gas can be introduced into the sample 12 close to a container wall through one supply line and the gas can be introduced into the sample 12 close to an opposite container wall through another supply line. It has been found that a bubble formation in the beam path, which can adversely influence or falsify the spectral measurement due to interference and/or reflection effects, can be reduced by such a gas introduction not only at one location but at several, in particular at at least two, different locations. As a result, a delay due to the dissolution process of the bubbles 19 up to the measurement can also be reduced and a time resolution of the measurement can be improved. As a result of less bubble formation, which usually occurs irregularly, the evaluation can also be better automated.

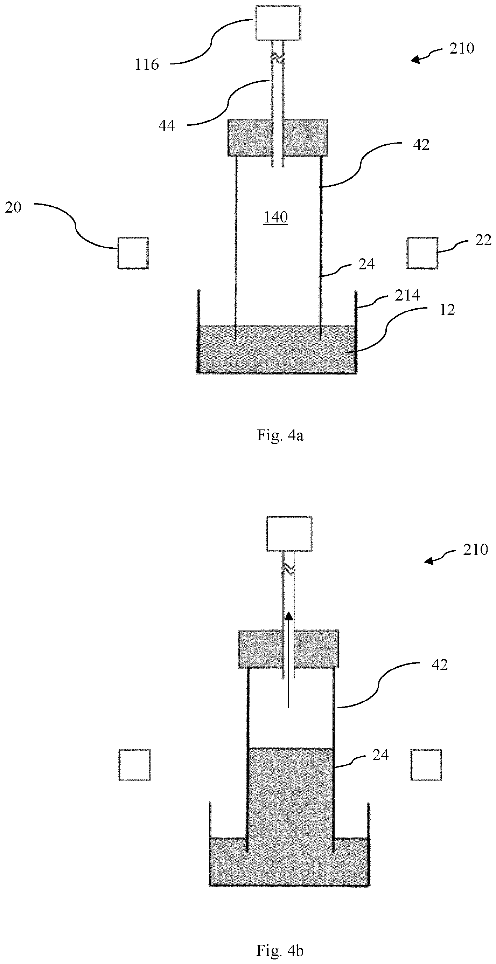

FIGS. 4a-d show a device 210 according to a third embodiment, which comprises a container 214 which contains a liquid sample 12, a tube section 42 with optical walls 24, a pump 116 which is in gas communication with a gas phase 140 in the tube section 42 via a line 44 or can be brought into a gas communication (for example, via a valve (not shown)), a radiation source 20 and a spectrometer 22.

The tube section 42 immerses into the liquid sample 12 in the region of a lower end within the container 214, so that during an operation of the pump 116, gas from the gas phase 140 located in the tube section 42 and simultaneously a part of the sample liquid 12 can be sucked into the tube section 42 against gravity.

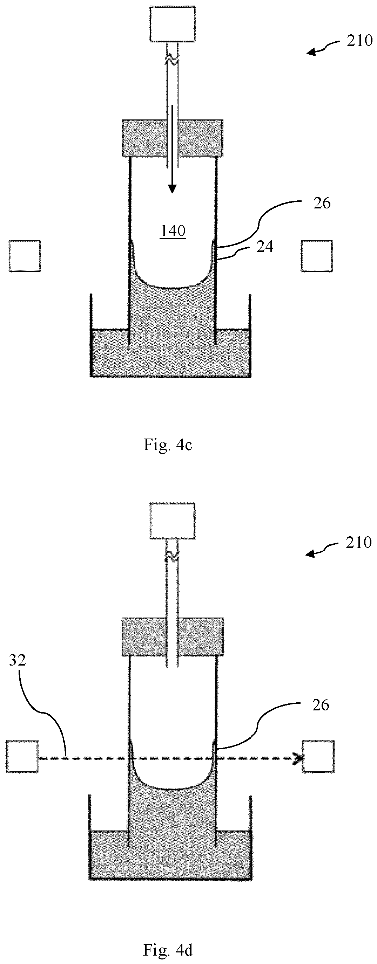

The device 210 of FIG. 4 is intended for carrying out the method according to the invention, the steps of which are illustrated in FIG. 2.

In step S1, the liquid sample 12 is provided in the container 214, as illustrated in FIG. 4a.

In step S2, an optical wall 24 of the tube section 42, which was not previously wetted with the sample 12, is wetted with the sample 12. For this purpose, as illustrated in FIG. 4b, the sample 12 or a part thereof is initially sucked into the tube section 42 against gravity with the pump 116 and thereby the initially unwetted optical wall 24 of the tube section 42 or an initially unwetted part thereof above the surface of the sample liquid 12 located outside the tube section 42 in the container 214 is wetted with the sample 12. Subsequently, as shown in FIG. 4c, the sucked-in/aspirated sample volume or a part thereof is drained or pushed out of the tube section 42 again by increasing the pressure in the gas phase 140 in the tube section 42 again, for example by venting or reversing the pumping direction, so that a liquid film 26 remains and is formed on the wetted optical wall 24.

The tube section 42 may have a substantially hollow cylindrical shape in some embodiments and may have other shapes in other embodiments. Its cross-sectional contour may be circular, square or angular, for example it may have a circular, elliptical, triangular, quadrilateral or polygonal cross-sectional contour.

In some embodiments (not shown), instead of the separate tube section 42 and the container 14, a common line section is provided, for example in the form of a T-piece, in particular as part of a flow-through production plant. In said common line section/T-piece, the sample 12 flowing through may rise to a certain height and wet the optical wall 24. To generate the liquid film 26, an external force in the form of a force or pressure force exerted by a fluid flow, in particular by a gas flow, may be used, which lowers the level of the sample liquid 12 rising and thereby leads to the formation of a liquid film 26. In step S3, as illustrated in FIG. 4d, the optical wall 24 and the liquid film 26 formed thereon are irradiated, in particular transilluminated, with an optical beam 32, which is generated by the correspondingly aligned and arranged radiation source 20, so that spectral information of the sample 12 can be impressed/imprinted thereon, provided that the sample 12 absorbs in the relevant spectral range.

In step S4, as is also illustrated in FIG. 4d, the spectral information of the sample 12 is acquired from the optical beam 32 with the aid of a spectrometer 22 configured, aligned and arranged for this purpose.

The embodiments described above enable a particularly simple, reliable, precise and cost-effective acquisition of spectral information and/or viscosity information on very thin liquid films, in particular with optimal thickness, of highly absorbing liquid samples. The use of pumps for wetting and for generating the liquid films allows the avoidance of a complex and costly actuator system and is particularly advantageous for an automated application, in particular for an in-line measurement application.

The embodiments described specifically are merely exemplary and not restrictive for the present invention, the scope of which is defined solely by the appended claims. The described features may be of importance in any combination.

### LIST OF REFERENCE SIGNS

- 10, 110, 210: Device
- 12: Sample, Sample Liquid
- 14, 114, 214: Container
- 15: Wetting Device
- 16, 116: Pump
- 18: Gas Supply Line
- 20: Radiation Source
- 22: Spectrometer
- 24: Optical Wall
- 26: Liquid Film
- 28: Closure
- 30: Gas Discharge Line
- 32: Optical Beam
- 34: Liquid
- 36: Line
- 38, 138: Opening
- 40: gas phase
- 42: tube section
- 44: line

## Claims

1. A method for performing a spectral measurement on a liquid sample (12), comprising the steps of:
- providing the liquid sample (12),
- wetting an optical wall (24) with the liquid sample (12) to generate a liquid film (26) of the sample (12) on the optical wall (24), wherein the optical wall (24) is at least temporarily aligned such that the sample (12) flows off or down the wetted optical wall (24) due to an external force and a thickness of the liquid film changes over time,
- irradiating, in particular transilluminating, the liquid film (26) on the wetted optical wall (24) with an optical beam (32) to generate an optical beam (32) containing spectral information of the sample (12),
- acquiring the spectral information from the generated optical beam (32).

2. The method according to claim 1, wherein the generated optical beam (32), which contains spectral information of the sample (12) and from which the spectral information is acquired, has been transmitted through the optical wall (24) or reflected therefrom.

3. The method according to claim 1 or 2, wherein the external force is gravity, a force or a pressure force exerted by a fluid flow, in particular by a gas flow, a magnetic force, a centrifugal force and/or a shear force.

4. The method according to any one of the preceding claims, wherein the liquid sample (12) is provided in a container (14, 114, 214), in a line, in a line section or in a line system.

5. The method according to any one of the preceding claims, wherein the liquid film (26) is irradiated with an optical beam (32) at different times and the spectral information is acquired at different thicknesses of the irradiated liquid film (26).

6. The method according to claim 5, wherein a viscosity information of the sample (12) is determined based on a time profile of the spectral information.

7. The method according to any one of the preceding claims, wherein gas is introduced into the liquid sample (12) provided, so that gas bubbles rise in the sample (12), lead to wetting of the optical wall (24) arranged in the region of the surface of the sample (12) and generate a liquid film (26) thereon.

8. The method according to claim 7, wherein the introduced gas is enriched with a substance and, in particular for this purpose, has previously been passed through a liquid (34) with the substance in an upstream container (114).

9. The method according to claim 8, wherein the liquid (34) is a, in particular the same, sample liquid (12) and/or the substance and/or the liquid is a solvent, or the liquid (34) is another liquid, in particular with a substance for changing a property of the sample (12).

10. The method according to any one of claims 1 to 6, comprising the steps of:
- generating a negative pressure in a tube section (42), wherein a wall of the tube section (42) is formed at least in sections by the optical wall (24), so that at least a part of the sample (12) is sucked into the tube section (42) and the optical wall (24) is wetted with the sample (12),
- removing the negative pressure in the tube section (42), so that at least a part of the sample (12) flows out of the tube section (42) or is pushed out again and a liquid film (26) is generated on the wetted optical wall (24).

11. The method according to any one of claims 4 to 6, wherein for wetting the optical wall (24) to generate the liquid film (26) on the optical wall (24), the orientation of the container (14, 114, 214) is changed, in particular the container is shaken or rotated, and/or a trickle of the sample (12) is generated on the optical wall (24).

12. A device (10, 110, 210) for performing a spectral measurement on a liquid sample (12), in particular according to a method according to any one of the preceding claims, comprising
- a container (14, 214), a line, a line section or a line system for storing and/or providing a liquid sample (12),
- an optical wall (24),
- a wetting device (15) for, in particular automated, wetting the optical wall (24) with the sample (12) to generate a liquid film (26) on the optical wall (24),
- a radiation source (20) for generating an optical beam (32) which can irradiate the liquid film (26) on the wetted optical wall (24), in particular transilluminate the same, and to which spectral information of the sample (12) can be imprinted,
- a device, in particular comprising a spectrometer (22), for acquiring spectral information of the sample (12) which is imprinted on the optical beam (32).

13. The device (10, 110, 210) according to claim 12, wherein the wetting device (15) comprises a pump (16, 116), in particular a gas pump, for introducing gas into the sample (12) and/or for generating a negative pressure in a tube section (42) for sucking at least a part of the sample (12) into the tube section (42).

14. The device (10, 110, 210) according to claim 13, wherein the wetting device (15) comprises an upstream container (114) for storing a liquid (26) such that gas, which is introduced into the upstream container (114), first flows through the liquid (26) in the upstream container (114) and then through the sample (12) in the container (14) when the containers (14, 114) are filled with the liquid or the sample (12), respectively.

15. The device (10, 110, 210) according to any one of claims 12 to 14, further comprising a control and evaluation unit, wherein the control and evaluation unit is configured for an operation,
- wherein the liquid film is irradiated, in particular transilluminated, with an optical beam (32) at different times and the spectral information is acquired at different thicknesses of the irradiated liquid film (26), and/or
- wherein a viscosity information of the sample (12) is determined based on a time profile of the spectral information.
